**Europäisches Patentamt**

**European Patent Office**

**Office européen des brevets**

(19)

(11) Publication number: **0 055 535**

**A1**

(12) **EUROPEAN PATENT APPLICATION**

(21) Application number: **81305767.6**

(22) Date of filing: **07.12.81**

(51) Int. Cl.³: **B 01 D 53/02**
**C 01 B 3/40**

(30) Priority: **31.12.80 GB 8041634**

(43) Date of publication of application:
**07.07.82 Bulletin 82/27**

(84) Designated Contracting States:
**DE FR GB NL**

(71) Applicant: **IMPERIAL CHEMICAL INDUSTRIES PLC**
**Imperial Chemical House Millbank**
**London SW1P 3JF(GB)**

(72) Inventor: **Rankin, James Deans**
**Northcott 3 West Green**
**Heighington Darlington County Durham(GB)**

(72) Inventor: **Twigg, Martyn Vincent**
**30 Valley Drive**
**Yarm Cleveland(GB)**

(74) Representative: **Chapman, Kenneth Hazel et al,**
**Imperial Chemical Industries PLC Legal Department:**
**Patents Thames House North Millbank**
**London SW1P 4QG(GB)**

(54) **Fluid purification.**

(57) A flowing fluid is purified by contacting with a solid absorbent in a physical form (such as webbed rings or foraminate metal sheets) having a geometric surface area per unit pressure drop of at least 0.1 in S.I units. Examples of fluids treated are (a) a mixture of CO with steam to be reacted over a copper-containing catalyst and (b) a naphtha or LPG hydrocarbon following hydrogenation to convert sulphur compounds to $H_2S$ and halogen compounds to hydracid.

EP 0 055 535 A1

## Fluid purification

This invention relates to fluid purification and in particular to the removal of trace impurities from fluids to be treated in highly sensitive systems such as catalysis.

As described in our US patent 4177252 in relation to the effect of compounds of halogens or sulphur on metallic copper shift catalysts, the chemical reactions by which such trace impurities exert their undesired action are very rapid and occur mainly at external geometric surfaces. Consequently it was proposed to carry out the shift reaction in a fixed catalyst bed having an inlet zone in which the volume-to-surface ratio of the catalyst pieces is less than in an outlet zone. This was to be provided for by using in the inlet zone catalyst pieces that were smaller than in the outlet zone or were formed with indentations or protrusions or lobes.

We have now realised that the inlet zone shapes disclosed in US 4177252 provide a relatively small increase in geometric surface unless a substantially increased pressure drop can be tolerated, and that this constraint can be evaded by use of a suitably structured absorbent material.

According to the invention a process for removing trace impurities from a flowing fluid by means of a solid absorbent is characterised in that the absorbent is in a physical form having a geometric surface area per unit pressure drop (hereinafter referred to as "G/P value") of at least 0.1 expressed in S.I units.

For the purposes of the invention the pressure drop is normalised by application of the following expression to the pressure drop    P as measured:

Normalised pressure drop $= \dfrac{\Delta P}{\frac{1}{2} u^2 \varrho L}$

where

$\Delta P$ is in Pa

u is the fluid velocity in m/sec (This is calculated as if the absorbent bed were empty)

$\varrho$ is the fluid density in $kg/m^3$

L is the length of the bed in m.

The geometric surface area is to be distinguished from the internal surface area:  since the rate of trace impurity absorption is determined by diffusion through a surface film of fluid and receives a negligibly small contribution from diffusion into pores, the internal surface area of the absorbent is not involved.  The geometric surface area is, for the purposes of the invention expressed per unit volume of a vessel filled with the absorbent.  Using units consistent with the pressure drop units its dimensions are $m^2 m^{-3}$, that is, $m^{-1}$.  Consequently the geometric surface area per unit pressure drop is dimensionless.

Other self-consistent dimensions could be used, if desired, and the limit specified would differ correspondingly.

Variously shaped absorbents can be used.  In general the shapes include flattened members of thickness under about 2 mm and are non-nesting:  saddles are an example.  In an especially useful process the absorbent is in the form of at least one structure having at least one through-passage.

The effect of the through passage or passages is to decrease the pressure drop for a given geometric surface area.  Taking a random-packed bed of 3.6 x 5.4 mm squat cylindrical pellets as standard, these have a G/P value of 0.06, but the absorbent structures used in the process have a G/P value at least 1.7 times, preferably at least 3 times as great (0.2 or more).  This improvement is readily attainable using cylindrical rings.  A more substantial improvement (at least 6-fold, to 0.4 - 0.7) can be obtained by using rings formed with internal webs.  The process preferably employs an absorbent in the form of random-packed coils or small honeycomb pieces having a G/P value of at least 0.6, that is at least 10 times as great as the above standard. In a further preferred form of the process the absorbent is in the form of a monolithic structure, in which event a G/P value at least 20 and preferably in the range 30 - 150 times the above standard is provided (that is, at least 1.2 especially 1.8 to 9.0). Absorbent shapes can, of course, be used in which less than such possible high surface areas are provided. A still higher G/P value, for example 50 - 200, can be obtained using foraminate sheet metal, for example gauze or expanded metal.

Owing to the low or very low pressure drop, the process can be carried out in long beds, having for example a length at least equal to and in the range 1 - 10 times, its diameter. As a result fluid flow velocities can be high enough to minimise film diffusion limitation and thus ensure effective removal of impurities present in extremely small trace quantities.

The absorbent can be in the form of a cartridge readily insertable into and removable from a reactor or even from a position in a pipe or a widened region in a pipe. If the absorbent is random-packed the cartridge includes a perforated container. If it is in sheet form, the sheets can be held together by tie rods.

Among the structures especially suitable are the following:

1.        rings of diameter in the range 5 - 20 mm (external), length 5 - 20 mm and thickness 0.5 - 10 mm when made of ceramic or down to 0.03 mm when made of metal or alloy;

2.        webbed rings of the same diameter and length as the rings but with maximum thickness 5 mm. Similarly incompletely bridged rings such as "PALL" rings can be used;
          (For 1 or 2 split or spiralled rings can be used).

3.        coils of wire or strip of thickness in the same ranges as for webbed rings, again depending on whether they are made of ceramic or metal. The outside dimensions are typically in the range 5 - 20 mm in diameter and 10 - 100 mm in length;

4.   small honeycombs having the same diameter and height ranges as the rings and having an open area of at least 30%, especially in the range 50 - 90%. Typically such honeycombs have 10 - 100 passages per $cm^2$;

5.   monoliths having an open area of at least 30%, especially in the range 50 - 90%. In a flow process a single monolith occupying the cross-sectional area of the vessel can be used or, more conveniently, a set of monolith units can be disposed side by side. The effects of a monolith can be obtained by stacking sheets parallel to the direction of fluid flow or (with suitable perforations) transversely or angled to that direction. A particularly suitable monolithic-type structure is described in our co-pending European application 80302945 (published under Serial No. 25308): this has through-flow passages angled to the general direction of fluid flow and is spaced from the walls of its containing vessel so as to cause the fluid to flow alternatingly through the passages and through the space between the structure and the walls. Our application describes various structures providing this flowpath, for example slant-cell honeycombs of ceramic or metal, stacked profiled plates and co-operating perforated plates such as expanded metal sheets. The flow-path within the structure can be in a secantial or, in an annular-section vessel, can be in a radial component or direction superimposed on the general flow direction. As a further alternative the monolith may be constituted by perforated (such as expanded metal) sheets not aligned to such through-passages;

6.   gauzes and other woven or non-woven masses. These provide a very high surface area per unit of pressure drop, but are less generally applicable because they lack rigidity.  They can be used in random-pack or monolithic form;

7.       open-cell foams.  These likewise can be used in random-pack or monolithic form.

The above mentioned monoliths, such as are provided by expanded metal, in which parallel but interrupted flow-paths are present, are especially preferred, since they suffer from film diffusion limitation no more than a random-packed bed, yet afford a much lower pressure drop, because "form-drag" is very much less. it is within the scope of the invention to introduce turbulence by providing deflection of flow, as in non-aligned expanded metal, especially when film diffusion limitation is serious.  This increases pressure drop but an increase by a factor of 4 is sufficient.

The structures can be composed of any material that will withstand the conditions of use.  Ceramics such as alumina, alumino-silicate, cordierite and spinels and also glasses and glass-ceramics are of general applicability.  Metals and alloys, especially iron alloys containing one or more of aluminium, chromium or silicon, as described in our co-pending European application 80301982 published under Serial No. 21736, are especially suitable, because they can be formed into structures of very high surface area per unit pressure drop and can be readily coated.

Among the absorbents that are especially useful are

A.       chemically-active compounds, for example oxides of Cu, Zn, Mn or Fe, for removing $H_2S$

oxides more basic than ZnO, for removing halogen hydracid (examples are hydroxides, aluminates and carbonates or alkali metals).

catalysts, especially of the type from which the trace impurities are to be excluded.

B.       highly porous absorbents, for example alumina, for removing water ions exchange resins, for removing ions molecular sieves, such as carbon or crystalline zeolites, for removing relatively involatile gases such as normally liquid compounds, gaseous hydrocarbons, vinyl chloride, nitrogen oxides, ammonia, $CO_2$, CO and nitrogen.

Such absorbents can adhere directly to the structure or to an intervening coating such as of alumina, chromia or silica. Such an intervening coating can be the product of superficially oxidising a metallic constituent of the structure and/or of application as a washcoat or a soluble decomposable compound.

In an important embodiment the invention provides a process for reacting carbon monoxide with steam to give carbon dioxide and hydrogen over a copper-containing shift catalyst, in which poisoning of the catalyst by traces of compounds of sulphur or chlorine is inhibited by subjecting the reactants to the process of the invention; the absorbent can comprise for example a compound more basic than zinc oxide, as broadly disclosed for example in our US patents 3922337 and 3943226, or can be a coating on a support of the copper-containing catalyst or a catalyst modified to contain less copper, as described in our US patent 4177252.

In another important embodiment the invention provides a process of purifying from halogen compounds a hydrocarbon feedstock, especially a naphtha or LPG to be subjected to catalytic reaction with steam at under 600°C to give a methane-containing gas. This purification process uses as absorbent an oxide more basic than zinc oxide and preferably follows a catalytic hydrogenation step in which at least organic sulphur is converted to $H_2S$ and an $H_2S$ removal step. The effect of the catalytic hydrotreatment is to convert organic halogen to halogen hydracid.

## EXAMPLE

Each of a series of absorbents or structures capable of supporting absorbent was set up in a catalyst bed 275 mm deep, 91 mm in diameter, and subjected to an air flow of 20 $m^3h^{-1}$ at 20°C. The pressure difference $\Delta P$ between the inlet and outlet air was measured in Pa and normalised as described above. (The gas density was taken as 1.2, assuming atmospheric pressure, and the gas velocity 0.85 m/sec). It was also expressed relative to 3.6 x 5.4 mm squat cylindrical pellets taken as standard (100).

The geometric surface of the samples was calculated from the weight of the sample filling the catalyst bed, the average weight of each piece and the dimensions of each piece.

In addition, the calculated pressure drop for a stack of randomly-oriented sheets of expanded metal of thickness 0.4 mm, with rectangular apertures 30 mm long, strand width 5 mm and strand pitch 3 mm. This was chosen because its area is about the same as cylindrical pellets: clearly much finer grades could be used.

TABLE

| Absorbent piece shape and dimensions, mm | | | | Surface area m$^{-1}$ | Pressure drop | | | Surface area per unit pressure drop |
|---|---|---|---|---|---|---|---|---|
| | | | | | Pa | Relative | m$^{-1}$ | |
| Cylinders | d | h | | | | | | |
| | 3.45 | 3.65 | | 1140 | 1913 | 115 | 15900 | 0.072 |
| | 5.4 | 3.6 | | 860 | 1667 | 100 | 13900 | 0.062 |
| | 8.7 | 6.7 | | 520 | 765 | 46 | 6400 | 0.081 |
| | 8.7 | 13.0 | | 380 | 470 | 28 | 3900 | 0.097 |
| Spheres | 6.4 | | | 520 | 736 | 44 | 6100 | 0.085 |
| (The above are comparisons, not according to the invention) | | | | | | | | |
| Rings | OD | ID | h | | | | | |
| | 8.4 | 6.1 | 7.5 | 620 | 343 | 21 | 2858 | 0.218 |
| | 15.5 | 7.9 | 6.2 | 370 | 186 | 11 | 1550 | 0.239 |
| | 15.4 | 11.2 | 15.7 | 260 | 118 | 7 | 990 | 0.262 |
| | 16.3 | 9.5 | 17.3 | 260 | 98 | 6 | 810 | 0.32 |
| Rings with 7 radial webs | OD | TH | h | | | | | |
| | 17.3 | 2 | 8.5 | 480 | 137 | 8 | 1140 | 0.421 |
| Rings with 5 radial webs | 17.0 | 2 | 17.3 | 440 | 78 | 5 | 650 | 0.677 |
| Small honey-combs (metal) of open area about 80% | 17.0 | 0.05 | 15.5 | 1600 | 177 | 11 | 1475 | 1.08 |
| Ceramic mono-lith : 36 equi-lateral triangles per cm$^2$ | – | 0.3 | – | | | | | |
| | – | 0.3 | – | 2500 | 123 | 7 | 1025 | 2.44 |
| Coils of wire | 6.4 | 0.5 | 12.7 | 1200 | 157 | 9 | 1308 | 0.92 |
| Expanded metal (cal-culated values) | – | – | – | 420 | 120 | 0.72 | 100 | 100 |

Note:  d = diameter, h = height, OD = outside diameter,

ID = inside diameter, TH = thickness

1.    A process for removing trace impurities from a flowing fluid by means of a solid absorbent characterised in that the absorbent is in a physical form having a geometric surface area per unit pressure drop (G/P value) of at least 0.1 in S.I units.

2.    A process according to claim 1 in which are used rings formed with internal webs and the G/P value is in the range 0.4 to 0.7.

3.    A process accroding to claim 1 in which the absorbent is in the form of random-packed coils or small honeycomb pieces and the G/P value is at least 0.6.

4.    A process according to claim 1 in which the absorbent is in the form of a monolithic structure having a G/P value in the range 1.8 to 9.0.

5.    A process according to claim 1 in which the absorbent is in the form of foraminate metal and the G/P value is in the range 50 - 200.

6.    A process according to any one of the preceding claims in which the absorbent is contained in a bed of length 1 - 10 times its diameter.

7.    A process according to any one of the preceding claims in which the absorbent is in the form of a cartridge readily insertable into and removable from a reactor or a pipe or widened region in a pipe.

8.    A process for reacting carbon monoxide with steam to give carbon dioxide and hydrogen over a copper-containing catalyst, in which poisoning of the catalyst by traces of sulphur or chlorine is inhibited by subjecting the reactants to a process according to any one of the proceding claims.

9.    A process according to claim 8 in which the absorbent comprises a compound more basic than zinc oxide or is a coating on a support of the copper-containing catalyst or a catalyst modified to contain less copper.

10.    A process for purifying from halogen compounds a naphtha or LPG hydrocarbon feedstock which comprises catalytically hydrogenating it to convert organic sulphur to $H_2S$ and organic halogen

to halogen hydracid, removing $H_2S$, and subjecting the so-treated hydrocarbon to an oxide more basic than zinc oxide in a process according to any one of claims 1 to 8.

0055535

European Patent
Office

**EUROPEAN SEARCH REPORT**

Application number

EP 81 30 5767

| Category | Citation of document with indication, where appropriate, of relevant passages | Relevant to claim | CLASSIFICATION OF THE APPLICATION (Int. Cl. ³) |
|---|---|---|---|
| D,A | EP - A - 0 025 308 (I.C.I.) * figures 1-4; page 1, line 2 - page 5, line 6; page 13, lines 4 and 5 * | 1,3,4, 8 | B 01 D 53/02 C 01 B 3/40 |
| D,A | US - A - 3 922 337 (J. STEWART CAMPBELL) * abstract * | 8,9 | |
| D,A | FR - A - 2 390 377 (I.C.I.) * pages 18 and 19 * & US - A - 4 177 252 | 8,9 | TECHNICAL FIELDS SEARCHED (Int.Cl. ³) |
| D,A | US - A - 3 943 226 (A. MILES ROBERT DIFFORD) * column 1, lines 4-30 * | 10 | B 01 D 53/00 B 01 J 35/00 |
| A | FR - A - 2 201 122 (SOC. DESMAR-QUEST) | | |
| A | FR - A - 2 325 421 (JAPAN GASO-LINE) | | |
| A | GB - A - 1 476 317 (INTERNATIONAL AIR MONITORS) | | CATEGORY OF CITED DOCUMENTS |
| A | GB - A - 1 397 264 (C. GUNNAR) | | X: particularly relevant if taken alone Y: particularly relevant if combined with another document of the same category A: technological background O: non-written disclosure P: intermediate document T: theory or principle underlying the invention E: earlier patent document, but published on, or after the filing date D: document cited in the application L: document cited for other reasons |
| A | GB - A - 1 376 888 (SECRETARY OF STATE FOR DEFENCE) | | |
| A | GB - A - 1 026 592 (R.H. EATON-WILLIAMS) | | |
| A | US - A - 4 223 187 (K. ATWOOD) | | &: member of the same patent family, corresponding document |

The present search report has been drawn up for all claims

| Place of search | Date of completion of the search | Examiner |
|---|---|---|
| The Hague | 16-04-1982 | BOGAERTS |

EPO Form 1503.1 06.78